# EUROPEAN PATENT SPECIFICATION

(11) **EP 3 751 446 B1**
(45) Date of publication and mention of the grant of the patent: **16.08.2023**
(21) Application number: 18907870.2
(22) Date of filing: 28.02.2018
(51) Int. Cl.: G06T 7/12, G06V 10/44, G06V 10/56, G06V 40/16

(54) **HAIRLINE CONTOUR LOCATING METHOD AND DEVICE, AND COMPUTER READABLE STORAGE MEDIUM**
HAARLINIENKONTURPOSITIONIERUNGSVERFAHREN UND -VORRICHTUNG UND COMPUTERLESBARES SPEICHERMEDIUM
PROCÉDÉ ET DISPOSITIF DE LOCALISATION DE CONTOUR DE NAISSANCE DES CHEVEUX, ET SUPPORT DE STOCKAGE LISIBLE PAR ORDINATEUR

(43) Date of publication of application: 16.12.2020
(73) Proprietor: Honor Device Co., Ltd., Shenzhen, Guangdong 518040 (CN)
(72) Inventor: GUO, Zhizhi, Shenzhen, Guangdong 518129 (CN); LU, Henghui, Shenzhen, Guangdong 518129 (CN); DONG, Chen, Shenzhen, Guangdong 518129 (CN); GAO, Wenmei, Shenzhen, Guangdong 518129 (CN)
(74) Representative: Maiwald GmbH
(86) International application number: PCT/CN2018/077586
(87) International publication number: WO 2019/165604

(56) References cited:
- CN-A- 105 913 067
- CN-A- 107 730 444
- CN-A- 107 730 444
- HSU SHENG-BIN ET AL: "Extraction of Visual Facial Features for Health Management", IEEE SYSTEMS JOURNAL, IEEE, US, vol. 10, no. 3, 1 September 2016 (2016-09-01), pages 992-1002, XP011620278, ISSN: 1932-8184, DOI: 10.1109/JSYST.2014.2325957 [retrieved on 2016-08-24]
- Mariusz Marzec ET AL: "DETECTION OF SELECTED FACE AREAS ON THERMOGRAMS WITH ELIMINATION OF TYPICAL PROBLEMS", , 1 January 2010 (2010-01-01), pages 1642-6037, XP055756156, Retrieved from the Internet: URL:http://yadda.icm.edu.pl/baztech/elemen t/bwmeta1.element.baztech-article-PWA4-001 8-0019/c/2010_v16_Marzec.pdf

## Description

### TECHNICAL FIELD

This application relates to the field of image detection, and more specifically, to a method and an apparatus for positioning a hairline contour, and a computer-readable storage medium.

### BACKGROUND

In a process of detecting face skin, a region of interest (region of interest, ROI) of the face skin needs to be obtained through division. The region of interest of the face skin includes a forehead skin region. If the obtained region of interest of the face is incomplete, miss detection of a skin region may occur.

In the prior art, a skin region of a face image is detected by using a color model, and a region of interest of the face is obtained by performing ellipse fitting on the skin region of the face image. However, in the prior art, the skin region (a hairline contour) of the face image is fitted into an ellipse. Because the fitted ellipse is a regular graph, if the ellipse is too large, hair interference is brought to the region of interest of the face, or if the ellipse is too small, it is impossible to obtain all the forehead skin region as the region of interest of the face. Consequently, the hairline contour of the face cannot be precisely outlined, and especially when left and right fringes of a person are irregular, it is more difficult to precisely outline the hairline contour of the face. CN 107 730 444 A describes an image processing method that includes: identify the human face region of pending image and the position of the local feature in the human face region is positioned according to preset model; according to the position of local feature described in the preset ratio standard adjustment of face length, above-mentioned image processing method, the position of the local feature of the human face region of positioning can be passed through, local feature in human face region is adjusted according to the preset ratio standard of face length, and then improve the harmony of the human face five-sense-organ in pending image, to meet the aesthetical standard of user, while improve interest.

Further background art can be found in:
- HSU SHENG-BIN ET AL: "Extraction of Visual Facial Features for Health Management", IEEE SYSTEMS JOURNAL, IEEE, US, vol. 10, no. 3, 1 September 2016, pages 992-1002, ISSN: 1932-8184, DOI: 10.1109/JSYST.2014.2325957, and
- Mariusz Marzec ET AL: "DETECTION OF SELECTED FACE AREAS ON THERMOGRAMS WITH ELIMINATION OF TYPICAL PROBLEMS", January 2010, pages 1642-6037, URL:http://yadda.icm.edu.pl/baztech/element/bwmeta1.element.baztech- article-PWA4-0018-0019/c/2010-v16_Marzec.pdf

Therefore, how to precisely detect the hairline contour of the face becomes an urgent problem to be resolved.

### SUMMARY

This application provides a method and an apparatus for positioning a hairline contour, and a computer-readable storage medium as defined by the independent claims, to precisely detect the hairline contour.

### BRIEF DESCRIPTION OF DRAWINGS

FIG. 1 is a schematic flowchart of a method for positioning a hairline contour according to an embodiment of this application;
FIG. 2 is a schematic flowchart of a possible implementation of step 140 in FIG. 1; and
FIG. 3 is a schematic structural diagram of an apparatus for positioning a hairline contour according to an embodiment of this application.

### DESCRIPTION OF EMBODIMENTS

The following describes technical solutions of this application with reference to accompanying drawings.

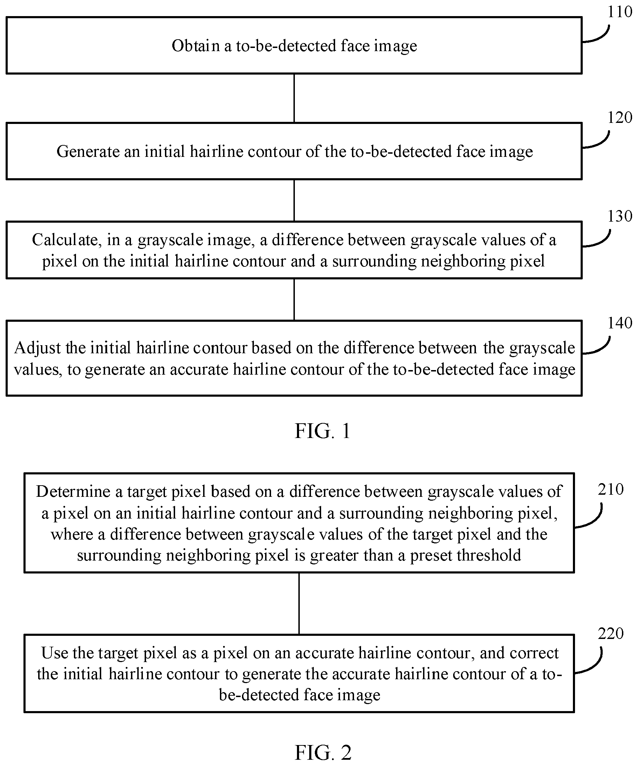

An embodiment of this application provides a method for positioning a hairline contour, to precisely detect the hairline contour. The following describes this embodiment of this application in detail with reference to FIG. 1 and FIG. 2.

FIG. 1 is a schematic flowchart of a method for positioning a hairline contour according to an embodiment of this application. The method in FIG. 1 may include step 110 to step 140. The following separately describes step 110 to step 140 in detail.

Step 110: Obtain a to-be-detected face image.

Step 120: Generate an initial hairline contour of the to-be-detected face image.

In this embodiment of this application, there may be a plurality of implementations of generating the initial hairline contour of the to-be-detected face image. This is not specifically limited in this application. In an example, a skin region may be detected within a face area by using a color model, so that the initial hairline contour of the to-be-detected face image can be obtained. In another example, a face skin region may be alternatively obtained through division by using a proportion of a face "three courts and five eyes", so that the initial hairline contour of the to-be-detected face image can be obtained.

An example in which the initial hairline contour is obtained by using a color model is used for description. Within the face area, a face skin region may be detected by using a proper color model, and a skin color region of the face can be obtained. The color model mentioned in the embodiments of this application is not specifically limited, and may be any color model. In an example, the color model may be, for example, YCrCb, RGB, HSV, Cr, or Cb.

Specifically, the color model YCrCb is used as an example for description. Face skin in a Cr channel may be centralized, for example, between 133 and 173, and face skin in a Cb channel may be centralized, for example, between 77 and 127. The skin region in the face image may be obtained through segmentation by determining different values of the face skin and hair in the color model YCrCb, so as to obtain the initial hairline contour of the face image.

An example in which the initial hairline contour is obtained by using the proportion of the face "three courts and five eyes" is used for description. Within the face area, regions such as eyes, a mouth, and a chin may be detected by using a peak-valley and a frequency characteristic of grayscale distribution of the face image, and then a forehead region may be obtained by division by using the proportion of the face "three courts and five eyes", so that the initial hairline contour of the to-be-detected face image can be obtained.

It should be understood that the face "three courts and five eyes" mentioned above is a general standard ratio of a face length to a face width of a person, where the head of the face is divided into three equal parts from top to bottom, and the head width is divided into five equal parts. Three courts refer to a length ratio of the face, and the face length may be divided into three equal parts. Apart from a forehead hairline to the eyebrow bone, a part from the eyebrow bone to the bottom of the nose, and a part from the bottom of the nose to the chin each occupy 1/3 of the face length. Five eyes refer to a width ratio of the face, where the face width is divided into five equal parts based on a length of an eye. A distance from a left hairline to a right hairline is a total length of five eyes. A distance between the two eyes is a length of one eye. A distance from each outer side of the two eyes to a corresponding side hairline is the length of one eye. Each part occupies 1/5 of the total length.

Optionally, in some embodiments, after the skin region is detected in the face image by using the color model, some protrusions with a relatively narrow width that are at an edge of the skin region may be eliminated, so that the initial hairline contour of the to-be-detected face image can be generated.

An implementation of eliminating the some protrusions with a relatively narrow width that are at an edge of the skin region is not specifically limited in the embodiments of this application. In an example, a horizontal width and a vertical width of each protrusion at an edge of the skin region may be separately calculated, and the some protrusions with a relatively narrow width may be eliminated.

Optionally, in some embodiments, after the skin region is detected in the face image by using the color model, interference from hair at an edge of the skin region may be eliminated, so that the initial hairline contour of the to-be-detected face image can be generated.

An implementation of eliminating the interference from the hair at an edge of the skin region is not specifically limited in the embodiments of this application. In an example, the face skin and hair may be distinguished based on different values of the face skin and the hair in a color model, and the interference from the hair at an edge of the skin region may be eliminated. Herein, the color model mentioned in the embodiments of this application is not specifically limited, and may be any color model. In an example, the color model may be, for example, YCrCb, RGB, HSV, Cr, or Cb.

Specifically, the color model RGB is used as an example for description. Generally, a value of a hair color of an East Asian person in an R channel may be less than 60. The face skin and hair may be distinguished based on different values of the face skin and the hair in the color model RGB, so that the interference from the hair at an edge of the face skin region can be eliminated.

It should be noted that, after the skin region is detected in the face image by using the color model, optionally, in some embodiments, only some protrusions with a relatively narrow width that are at an edge of the face skin region may be eliminated. Optionally, in some embodiments, the interference from the hair at an edge of the face skin region may be eliminated only based on the color model. Optionally, in some embodiments, the protrusions with a relatively narrow width that are at an edge of the skin region may be eliminated, and the interference from the hair at an edge of the skin region may be also eliminated based on the color model.

Step 130: Calculate, in a grayscale image, a difference between grayscale values of a pixel on the initial hairline contour and a surrounding neighboring pixel.

The grayscale image is not specifically limited in the embodiments of this application. For example, the grayscale image may be a grayscale image that is not stretched. For another example, the grayscale image may be alternatively a grayscale image obtained after contrast stretching.

In this embodiment of this application, the difference between the grayscale values of the pixel on the initial hairline contour and the surrounding neighboring pixel may be calculated in the grayscale image, that is, a local direction gradient of a pixel on the initial hairline contour is calculated. A direction for calculating a local direction gradient of a highest point of the initial hairline contour is not specifically limited in the embodiments of this application. In an example, a difference between grayscale values of a pixel on the initial contour and one surrounding neighboring pixel may be calculated. For example, a difference between grayscale values of a pixel on the initial contour and one pixel in a y direction may be calculated. For another example, a difference between grayscale values of a pixel on the initial contour and one pixel in a 90-degree direction may be alternatively calculated. For another example, a difference between grayscale values of a pixel on the initial contour and one pixel in a -45-degree direction may be alternatively calculated. For another example, a difference between grayscale values of a pixel on the initial contour and one pixel in a 45-degree direction may be alternatively calculated. In another example, differences between grayscale values of a pixel on the initial contour and a plurality of surrounding neighboring pixels may be calculated. For example, differences between grayscale values of a pixel on the initial contour and a plurality of neighboring pixels in a y direction, a 90-degree direction, a 45-degree direction, and the like may be calculated.

Step 140: Adjust the initial hairline contour based on the difference between the grayscale values, to generate an accurate hairline contour of the to-be-detected face image.

In this embodiment of this application, the initial hairline contour may be corrected based on a difference between grayscale values of pixels on the initial contour (which may also be referred to as a direction gradient of the pixels on the initial contour), so that the accurate hairline contour of the to-be-detected face image can be generated.

A quantity of pixels on the initial hairline contour is not specifically limited in the embodiments of this application. In an example, a grayscale value of one pixel on the initial hairline contour may be calculated. In another example, a difference between grayscale values of a plurality of pixels on the initial hairline contour may be alternatively calculated.

There may be a plurality of specific implementations of step 140. This is not specifically limited in this application. In an example, a calculated target pixel may be used as a pixel on the accurate hairline contour, and the accurate hairline contour of the to-be-detected face image is generated based on a change trend of the initial hairline contour. In another example, a calculated target pixel may be alternatively used as a pixel on the accurate hairline contour. A first hairline contour of the to-be-detected face image is generated based on a change trend of the initial hairline contour. In addition, a part that does not meet a requirement and that is on the first hairline contour may be corrected to obtain the accurate hairline contour of the to-be-detected face image. The following describes in detail the foregoing specific implementation with reference to FIG. 2, and details are not described herein.

In this embodiment of this application, the initial hairline contour of the face image may be corrected in the grayscale image by calculating the difference between the grayscale values of the pixel on the initial hairline contour and the surrounding neighboring pixel, so that the hairline contour of the face image can be precisely outlined. In addition, when left and right fringes of a user are irregular, a hairline contour of a face image may be also precisely outlined, so that all forehead skin can be obtained as an ROI of the face.

FIG. 2 is a schematic flowchart of a possible implementation of step 140 in FIG. 1. The method in FIG. 2 may include step 210 and step 220. The following separately describes step 210 and step 220 in detail.

Step 210: Determine the target pixel based on the difference between the grayscale values of the pixel on the initial hairline contour and the surrounding neighboring pixel, where a difference between grayscale values of the target pixel and the surrounding neighboring pixel is greater than a preset threshold.

Optionally, in some embodiments, the target pixel may be a highest point on the accurate hairline contour.

Optionally, in some embodiments, if the generated initial hairline contour meets the proportion of the face "three courts and five eyes", a local direction gradient of the highest point of the initial hairline contour may be calculated.

The following uses a 90-degree direction gradient of the target pixel as an example for description. A difference between a pixel value of the highest pixel on the initial contour and a pixel value of a pixel that is in a 90-degree direction and that is neighboring to the highest pixel may be used as a direction gradient of the highest pixel. If the direction gradient exceeds the preset threshold, the highest pixel of the initial contour may be used as a highest pixel of the accurate face hairline contour. If the direction gradient is less than the preset threshold, a next highest pixel may continue to be found until the direction gradient of the highest pixel exceeds the preset threshold.

Optionally, in some embodiments, because a color of the face skin is relatively similar to that of the hair, a boundary between the face skin and the hair cannot be distinguished based on color segmentation. Consequently, the generated initial hairline contour does not meet the proportion of the face "three courts and five eyes". In this embodiment of this application, a detection region of the highest pixel may be determined by using the proportion of the face "three courts and five eyes", and the highest pixel (that is, the target pixel) on the accurate hairline contour may be located in the detection region of the highest pixel.

It should be understood that the detection region of the highest point of the hairline may be obtained through division based on the proportion of "three courts and five eyes", and then a direction gradient of a pixel may be calculated in the detection region of the highest point of the hairline. A grayscale image of the detection region of the highest point of the hairline may be a grayscale image obtained after contrast stretching, and the target pixel may be calculated in the grayscale image obtained after contrast stretching.

An implementation of performing contrast stretching on the grayscale image is not specifically limited in the embodiments of this application, and may be an increase in a brightness-darkness difference amplitude of the grayscale image in any form. In an example, contrast stretching may be performed on the grayscale image based on an automatic color equalization (automatic color equalization, ACE) algorithm. For example, the difference (which may also be referred to as a relative bright-dark relationship) between grayscale values of the target pixel and the surrounding pixel may be calculated based on differential calculation, to correspondingly increase the brightness-darkness difference amplitude of the grayscale image. In other words, after the contrast stretching is performed, the boundary between the face skin and the hair may be distinguished by using different pixel values of the face skin and the hair.

In this embodiment of this application, a connected domain meeting a requirement may be selected from all highest pixels meeting the requirement (that is, direction gradients of the pixels are all greater than the preset threshold), and a highest point in the connected domain may be determined as the target pixel. In an example, a convex connected domain may be selected. Specifically, the connected domain may be divided into N segments, and an average y coordinate in each segment may be calculated.

Step 220: Use the target pixel as a pixel on the accurate hairline contour, and correct the initial hairline contour to generate the accurate hairline contour of the to-be-detected face image.

In this embodiment of this application, the target pixel may be used as the pixel on the accurate hairline contour, or the target pixel may be used as the highest pixel on the accurate hairline contour.

There are a plurality of specific implementations of step 220. In an example, the target pixel may be used as the highest pixel on the accurate hairline contour, and the accurate hairline contour of the to-be-detected face image may be generated based on a change trend of the initial hairline contour. In another example, the target pixel may be used as the highest pixel on the accurate hairline contour. A first hairline contour of the to-be-detected face image may be generated based on a change trend of the initial hairline contour. Finally, a part that does not meet the requirement and that is on the first hairline contour may be corrected to obtain the accurate hairline contour of the to-be-detected face image.

In this embodiment of this application, there is no specific limitation on an implementation in which the part that does not meet the requirement and that is on the first hairline contour may be corrected to obtain the accurate hairline contour of the to-be-detected face image. In an example, a part that is on the first hairline contour and that decreases relatively sharply may be corrected. A direction gradient between a pixel on the part that is on the first hairline contour and that decreases relatively sharply and a surrounding pixel of the part may be calculated. Therefore, the first hairline contour may be corrected to obtain the accurate hairline contour of the to-be-detected face image.

An implementation of determining the part that is on the first hairline contour and that decreases relatively sharply is not specifically limited in the embodiments of this application. In an example, on a y coordinate, if a difference between y coordinate values of the target pixel and a neighboring pixel is greater than a preset threshold, a location of the target pixel may be determined as the part decreasing relatively sharply.

In this embodiment of this application, after the target pixel on the precise hairline contour is found, the target pixel may be used as a center to traverse both a left side and a right side of the first hairline contour, so as to correct the part that is on the first hairline contour and that decreases relatively sharply. Therefore, the accurate hairline contour can be obtained. Especially, when left and right fringes of a user are irregular, a hairline contour of a face image can be also precisely outlined.

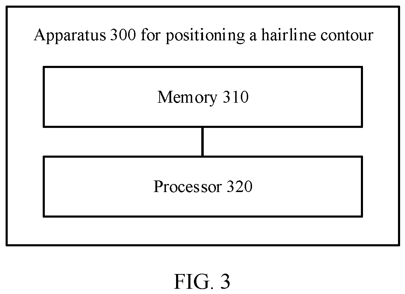

The foregoing describes in detail the method for positioning a hairline contour provided in the embodiments of this application with reference to FIG. 1 and FIG. 2. The following describes in detail an apparatus for positioning a hairline contour provided in an embodiment of this application with reference to FIG. 3.

FIG. 3 is a schematic structural diagram of an apparatus for positioning a hairline contour according to an embodiment of this application. An apparatus 300 for positioning a hairline contour in FIG. 3 may perform the method for positioning a hairline contour described in any one of the embodiments in FIG. 1 and FIG. 2. The apparatus 300 for positioning a hairline contour in FIG. 3 may include a memory 310 and a processor 320. The memory 310 may be configured to store a program, and the processor 320 may be configured to execute the program stored in the memory 310. When the program stored in the memory 310 is executed, the processor 320 may perform the method for positioning a hairline contour described in any one of the foregoing embodiments.

It should be understood that, the term "and/or" in the embodiments of this application describes only an association relationship for describing associated objects and represents that three relationships may exist. For example, A and/or B may represent the following cases: Only A exists, both A and B exist, and only B exists. In addition, the character "/" in this specification generally indicates an "or" relationship between the associated objects.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer program instructions are loaded and executed on the computer, the procedure or functions according to the embodiments of the present invention are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid state disk, SSD)), or the like.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for positioning a hairline contour, comprising:
obtaining (110) a to-be-detected face image;
generating (120) an initial hairline contour of the to-be-detected face image;
calculating (130), in a grayscale image, a difference between grayscale values of a pixel on the initial hairline contour and a neighboring pixel; and
adjusting (140) the initial hairline contour based on the difference between the grayscale values, to generate an accurate hairline contour of the to-be-detected face image, wherein the adjusting the initial hairline contour based on the difference between the grayscale values, to generate an accurate hairline contour of the to-be-detected face image comprises:
determining (210) a target pixel based on the difference between the grayscale values of the pixel on the initial hairline contour and the neighboring pixel, wherein a difference between grayscale values of the target pixel and the neighboring pixel is greater than a preset threshold; and
using (220) the target pixel as a pixel on the accurate hairline contour, and generating the accurate hairline contour of the to-be-detected face image based on a change trend of the initial hairline contour.

2. The method according to claim 1, wherein the target pixel is a highest point on the accurate hairline contour.

3. The method according to any one of claims 1 to 2, wherein the grayscale image is a grayscale image obtained after contrast stretching.

4. The method according to any one of claims 1 to 3, wherein the generating an initial hairline contour of the to-be-detected face image comprises:
obtaining a skin region in the to-be-detected face image through segmenting based on a color model; and
eliminating a protrusion with a relatively narrow width that is at an edge of the skin region, to generate the initial hairline contour of the to-be-detected face image.

5. The method according to claim 4, wherein the generating an initial hairline contour of the to-be-detected face image further comprises:
eliminating interference from hair at the edge of the skin region based on the color model, to generate the initial hairline contour of the to-be-detected face image.

6. The method according to claim 4 or 5, wherein the color model is YCrCb.

7. An apparatus for positioning a hairline contour, comprising a memory and a processor, wherein
the memory is configured to store a program; and
the processor is configured to execute the program stored in the memory, and when the program is executed, the processor performs the method according to any one of claims 1 to 6.

8. A computer-readable storage medium (310), comprising a computer instruction, wherein when the computer instruction is run on an apparatus (300) for positioning a hairline contour, the apparatus for positioning a hairline contour is enabled to perform the method according to any one of claims 1 to 6.

## Patentansprüche

1. Verfahren zum Positionieren einer Haarlinienkontur, Folgendes umfassend:
Ermitteln (110) eines zu detektierenden Gesichtsbilds;
Erzeugen (120) einer anfänglichen Haarlinienkontur des zu detektierenden Gesichtsbilds;
Berechnen (130), in einem Grauskalenbild, einer Differenz zwischen Grauskalenwerten eines Pixels auf der anfänglichen Haarlinienkontur und eines benachbarten Pixels; und
Anpassen (140) der anfänglichen Haarlinienkontur auf der Grundlage der Differenz zwischen den Grauskalenwerten, um eine genaue Haarlinienkontur des zu detektierenden Gesichtsbilds zu erzeugen, wobei das Anpassen der anfänglichen Haarlinienkontur auf der Grundlage der Differenz zwischen den Grauskalenwerten, um eine genaue Haarlinienkontur des zu detektierenden Gesichtsbilds zu erzeugen, Folgendes umfasst:
Bestimmen (210) eines Zielpixels auf der Grundlage der Differenz zwischen den Grauskalenwerten des Pixels auf der anfänglichen Haarlinienkontur und des benachbarten Pixels, wobei eine Differenz zwischen Grauskalenwerten des Zielpixels und des benachbarten Pixels größer ist als ein voreingestellter Schwellenwert; und
Verwenden (220) des Zielpixels als einen Pixel auf der genauen Haarlinienkontur und Erzeugen der genauen Haarlinienkontur des zu detektierenden Gesichtsbilds auf der Grundlage eines Änderungstrends der anfänglichen Haarlinienkontur.

2. Verfahren nach Anspruch 1, wobei der Zielpixel ein höchster Punkt auf der genauen Haarlinienkontur ist.

3. Verfahren nach einem der Ansprüche 1 bis 2, wobei das Grauskalenbild ein Grauskalenbild ist, das nach Kontrastdehnung erhalten wird.

4. Verfahren nach einem der Ansprüche 1 bis 3, wobei das Erzeugen einer anfänglichen Haarlinienkontur des zu detektierenden Gesichtsbilds Folgendes umfasst:
Ermitteln eines Hautbereichs in dem zu detektierenden Gesichtsbild durch Segmentieren auf der Grundlage eines Farbmodells; und
Eliminieren einer Protrusion mit einer relativ schmalen Breite, die an einem Rand des Hautbereichs ist, um die anfängliche Haarlinienkontur des zu detektierenden Gesichtsbilds zu erzeugen.

5. Verfahren nach Anspruch 4, wobei das Erzeugen einer anfänglichen Haarlinienkontur des zu detektierenden Gesichtsbilds weiterhin Folgendes umfasst:
Eliminieren einer Beeinträchtigung durch Haar am Rand des Hautbereichs auf der Grundlage des Farbmodells, um die anfängliche Haarlinienkontur des zu detektierenden Gesichtsbilds zu erzeugen.

6. Verfahren nach Anspruch 4 oder 5, wobei das Farbmodell YCrCb ist.

7. Vorrichtung zum Positionieren einer Haarlinienkontur, einen Speicher und einen Prozessor umfassend, wobei
der Speicher eingerichtet ist, um ein Programm zu speichern; und
der Prozessor eingerichtet ist, um das Programm auszuführen, das im Speicher gespeichert ist, und, wenn das Programm ausgeführt wird, der Prozessor das Verfahren nach einem der Ansprüche 1 bis 6 durchführt.

8. Computerlesbares Speichermedium (310), einen Computerbefehl umfassend, wobei, wenn der Computerbefehl auf einer Vorrichtung (300) zum Positionieren einer Haarlinienkontur abläuft, der Vorrichtung zum Positionieren einer Haarlinienkontur ermöglicht wird, das Verfahren nach einem der Ansprüche 1 bis 6 durchzuführen.

## Revendications

1. Procédé de positionnement d'un contour de naissance des cheveux, comprenant :
l'obtention (110) d'une image de visage à détecter ;
la génération (120) d'un contour de naissance des cheveux initial de l'image de visage à détecter ;
le calcul (130), dans une image en niveaux de gris, d'une différence entre les valeurs en niveaux de gris d'un pixel sur le contour de naissance des cheveux initial et d'un pixel voisin ; et
l'ajustement (140) du contour de naissance des cheveux initial sur la base de la différence entre les valeurs de niveaux de gris, pour générer un contour de naissance des cheveux précis de l'image de visage à détecter, l'ajustement du contour de naissance des cheveux initial sur la base de la différence entre les valeurs de niveaux de gris, pour générer un contour de naissance des cheveux précis de l'image de visage à détecter comprenant :
la détermination (210) d'un pixel cible sur la base de la différence entre les valeurs de niveaux de gris du pixel sur le contour de naissance des cheveux initial et du pixel voisin, une différence entre les valeurs de niveaux de gris du pixel cible et du pixel voisin étant supérieure à un seuil prédéfini ; et
l'utilisation (220) du pixel cible en tant que pixel sur le contour de naissance des cheveux précis et la génération du contour de naissance des cheveux précis de l'image de visage à détecter sur la base d'une tendance de changement du contour de naissance des cheveux initial.

2. Procédé selon la revendication 1, le pixel cible étant un point le plus élevé sur le contour de naissance des cheveux précis.

3. Procédé selon l'une quelconque des revendications 1 et 2, l'image en niveaux de gris étant une image en niveaux de gris obtenue après étirement du contraste.

4. Procédé selon l'une quelconque des revendications 1 à 3, la génération d'un contour de naissance des cheveux initial de l'image de visage à détecter comprenant :
l'obtention d'une région de la peau dans l'image de visage à détecter par segmentation sur la base d'un modèle de couleur ; et
l'élimination d'une protubérance d'une largeur relativement faible qui se trouve sur un bord de la région de la peau, afin de générer le contour de naissance des cheveux initial de l'image de visage à détecter.

5. Procédé selon la revendication 4, la génération d'un contour de naissance des cheveux initial de l'image de visage à détecter comprenant en outre :
l'élimination de l'interférence des cheveux au bord de la région de la peau sur la base du modèle de couleur, afin de générer le contour de naissance des cheveux initial de l'image de visage à détecter.

6. Procédé selon la revendication 4 ou 5, le modèle de couleur étant YCrCb.

7. Appareil de positionnement d'un contour de naissance des cheveux, comprenant une mémoire et un processeur,
la mémoire étant configurée pour stocker un programme ; et
le processeur étant configuré pour exécuter le programme stocké dans la mémoire, et lorsque le programme est exécuté, le processeur réalisant le procédé selon l'une quelconque des revendications 1 à 6.

8. Support de stockage lisible par ordinateur (310), comprenant des instructions informatiques, lorsque les instructions informatiques sont exécutées sur un appareil (300) pour positionner un contour de naissance des cheveux, l'appareil pour positionner un contour de naissance des cheveux étant capable de réaliser le procédé selon l'une quelconque des revendications 1 à 6.
